# DEMANDE DE BREVET EUROPEEN

(11) **EP 2 362 582 A1**
(43) Date de publication de la demande: **31.08.2011**
(21) Numéro de dépôt: 11151678.7
(22) Date de dépôt: 21.01.2011
(51) Int. Cl.: H04L 12/28

(54) **Procédé et système domotique contextuel**

(30) Priorité: 19.02.2010 FR 1000706
(71) Demandeur: Alcatel Lucent, 75007 Paris (FR)
(72) Inventeur: Ghorbel, Mahmoud, 91620, Nozay (FR); Dupont, Marie-Pascale, 91620, Nozay (FR); Kamga, Guy-Bertrand, 91620, Nozay (FR); Piekarec, Sophie, 91620, Nozay (FR)
(74) Mandataire: Shamsaei Far, Hassan

(57) **Abrégé**

Procédé domotique contextuel au service d'au moins un utilisateur (1) pourvu d'une pluralité de dispositifs domotiques (11-12) au sein d'un environnement (2), ce procédé comprenant les étapes suivantes :
- sondage de paramètres utilisateur (4);
- sondage de paramètres environnementaux (5);
- sondage de métadonnées domotiques (6) ;
- profilage d'une situation utilisateur à l'aide des données sondées ;
- analyse de la situation utilisateur profilée;
- décision d'au moins une action à commander selon l'analyse de la situation utilisateur et de règles (60) prédéfinies.

## Description

La présente invention se rapporte au domaine technique de la domotique.

On désigne ci-après par « domotique », contraction des deux termes « domicile » (notamment, domus en latin) et « automatique », l'ensemble des techniques d'automatismes, de l'électronique, de l'informatique et des télécommunications utilisées dans un domicile et destinées à ceux qui y résident. On entend ici par « domicile » tout environnement résidentiel, lieu d'habitation, ou plus généralement lieu de vie, tels que, par exemple, une maison, une chambre d'hôtel, une villa, voire même un lieu de travail.

A l'aide de solutions technologiques, la domotique vise à améliorer la vie au quotidien en apportant au résident des fonctions liées
- au confort domestique: commande à distance, automatisation de tâches ménagères ;
- à l'économie d'énergie: programmation et contrôle de l'éclairage, de la climatisation, du chauffage;
- à la sécurité: alarmes, vidéosurveillances/télésurveillance, détection des fuites d'eau/gaz combustibles/fumées/coupures de courant, identification des visiteurs, contrôle d'accès; et
- au confort multimédia (loisir numérique): contrôle des médias (TV, PVR/DVR, radio, chaine Hifi, Internet, home cinéma, musique, jeux vidéo, téléphonie fixe/mobile, information/vidéo à la demande, téléachat, banque à domicile, interphone).

En particulier, les développements récents dans le domaine de la technologie de l'information ont ouvert la voie à une offre abondante de dispositifs domotiques. Cependant, face à la très grande diversité des tâches et des fonctions qu'on peut rencontrer dans le monde de la domotique, la plupart de ces dispositifs, à ce jour, demeurent
- très spécifiques en ne se rapportant généralement qu'à un seul objectif de déploiement (sécurité, gestion d'énergie ou commodité). Il en résulte qu'ils ne permettent pas une prise en charge unifiée des différents types de tâches qu'un utilisateur aurait besoin, ainsi qu'ils ne peuvent avoir une représentation complète de la situation de l'utilisateur ;
- très superficiels dans leur analyse de la situation de l'utilisateur, leurs actions étant directement liées à des informations brutes recueillies par un ou plusieurs capteur(s) sans aucune interprétation sémantique de ces informations ;
- incompatibles en absence d'interopérabilité/extensibilité entre ces dispositifs.

Ainsi, afin de déclencher/contrôler simultanément une pluralité de tâches, accordement à une situation particulière, l'utilisateur se retrouve contraint d'identifier, d'abord, par lui-même les actions requises à déclencher, ensuite, commander/surveiller séparément ses dispositifs domotiques d'une manière attentionnée et fiable. À défaut, le fait recherché ne peut être accompli convenablement. La qualité du service rendu à l'utilisateur est, par conséquent, réduite.

Un objet de la présente invention est de remédier aux inconvénients précités.

Un autre objet de la présente invention est d'atteindre un niveau supérieur de services domotiques rendus à l'utilisateur.

Un autre objet de la présente invention est la mise en réseau intelligent des dispositifs domotiques d'un domicile.

Un autre objet de la présente invention est un système domotique apte à anticiper et répondre, en temps réel, conformément aux attentes de l'utilisateur.

Un autre objet de la présente invention est un système domotique ubiquitaire intelligent capable d'interagir naturellement avec l'utilisateur.

Un autre objet de la présente invention est d'établir une domotique d'intelligence ambiante au sein d'un domicile.

Un autre objet de la présente invention est de fournir un système d'analyse de données multimodales, et de prise de décision.

Un autre objet de la présente invention est de proposer un système domotique capable de capturer des informations multimodales, inférer une situation utilisateur, et exécuter l'action la plus appropriée.

Un autre objet de la présente invention est un système domotique intuitif, évolutif, et adaptable aux besoins de chaque utilisateur.

Un autre objet de la présente invention est de proposer un système domotique contextuel promouvant le confort multimédia.

À cet effet, l'invention propose, suivant un premier aspect, un procédé domotique contextuel au service d'au moins un utilisateur pourvu d'une pluralité de dispositifs domotiques au sein d'un environnement, ce procédé comprenant les étapes suivantes :
- sondage de paramètres utilisateur ;
- sondage de paramètres environnementaux ;
- sondage de métadonnées domotiques ;
- profilage d'une situation utilisateur à l'aide des données sondées ;
- analyse de la situation utilisateur profilée;
- décision d'au moins une action à commander selon l'analyse de la situation utilisateur et de règles prédéfinies.

L'invention propose, selon un deuxième aspect, un système domotique contextuel au service d'au moins un utilisateur pourvu d'une pluralité de dispositifs domotiques au sein d'un environnement, ce système comprenant
- un sondeur des paramètres utilisateur ;
- un sondeur de paramètres environnementaux ;
- un sondeur de métadonnées domotiques ;
- un profileur de situation utilisateur à l'aide des données sondées ;
- un interpréteur de la situation utilisateur profilée ;
- un agent de décision d'au moins une action à commander selon les résultats de l'interpréteur de situation utilisateur et de règles prédéfinies.

Avantageusement, ce procédé comprend, en outre, une étape de configuration permettant de spécifier les règles et une étape de notification de l'utilisateur.

Avantageusement, ce système comprend, en outre, un gestionnaire d'interactions utilisateur réactives à la parole de l'utilisateur.

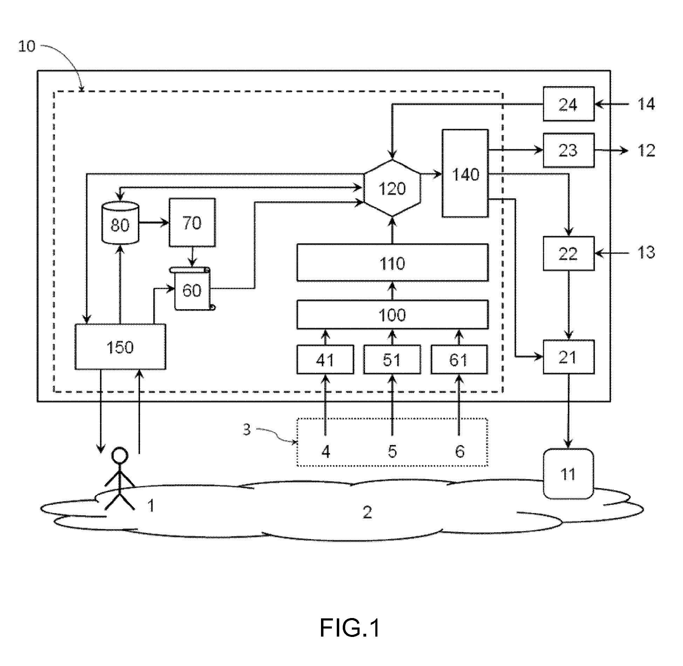

D'autres caractéristiques et avantages de l'invention apparaîtront plus clairement et de manière concrète à la lecture de la description ci-après de modes de réalisation préférés, laquelle est faite en référence à la figure 1 qui illustre graphiquement une représentation fonctionnelle d'éléments du système domotique contextuel.

En référence à la figure 1, le système domotique contextuel au service de l'utilisateur 1 dans l'environnement 2 comprend une pluralité de modules fonctionnels incluant :
- un analyseur 10 de situation utilisateur ;
- un système de capteurs 3; et
- des interfaces de communications 21-24.

L'interprétation de la situation de l'utilisateur 1 dans l'environnement 2 se fait, notamment, via l'analyse des informations recueillies en temps réel par le système de capteurs 3 déployé au sein de l'environnement 2. Pour cela, l'analyseur 10 de situation utilisateur est configuré pour
- acquérir les données multi-sources hétérogènes mesurées par le système de capteurs 3 ;
- analyser ces données ;
- inférer la situation courante de l'utilisateur 1 ; et
- décider des actions appropriées à commander.

Les informations transmises depuis le système de capteurs 3 à l'analyseur 10 de situation utilisateur sont des grandeurs physiques mesurables, principalement, concernant
- l'utilisateur 1 , désignés ci-après par paramètres utilisateur 4, tels que sa présence (absent/présent dans l'environnement 2, absent/présent dans son sofa par exemple), sa localisation au sein de l'environnement 2 (dans la cuisine, dans la chambre à coucher par exemple), ses activités (en communication, endormi, regarder la télévision par exemple), son identité (visage, posture, badge, voix, empreinte biométrique, parole par exemple) ;
- l'environnent 2, désignés ci-après par paramètres environnementaux 5, tels que l'état de l'environnement 2 (la température, la présence de fumée, le niveau de bruit ambiant, le niveau d'humidité par exemple), le(s) évènement(s) en cours dans l'environnement 2 (un bébé qui pleure dans sa chambre, un invité est à la porte de la maison par exemple) ;
- les dispositifs domotiques 11-12, désignés ci-après par métadonnées domotiques 6, tels que l'état du dispositif (en marche/pause/veille/arrêt), le programme en cours (le nom du programme de télévision en affichage, le cycle en cours de la machine à laver, un appel entrant pour un téléphone fixe/mobile, un message reçu pour un téléphone mobile par exemple).

On distingue, ci-après, parmi les dispositifs domotiques 11-12, les dispositifs domotiques multimédia 11 (une télévision, un home cinéma, chaine Hifi, une radio, un ordinateur par exemple) connectés à des sources de flux multimédia 13 internes et/ou externes (un réseau Internet/Intranet, un disque dur, une plateforme VoD, un réseau de diffusion de la télévision numérique/analogique par exemple).

L'analyse de la situation utilisateur s'appuie sur une pluralité de données transmises depuis le système de capteurs 3 focalisés sur l'utilisateur 1, l'environnement 2 et les dispositifs domotiques 11-12.

Pour acquérir les paramètres utilisateur 4, l'analyseur 10 de situation utilisateur est pourvu d'un sondeur 41 de paramètres utilisateur permettant de capter tout changement dans ces paramètres 4. A titre d'exemples non-exhaustifs, le sondeur 41 de paramètres utilisateur permet de détecter que l'utilisateur 1
- est en discussion avec une autre personne présente dans l'environnement 2 ;
- initie/répond à une communication téléphonique ;
- quitte la salle de séjour pour aller à la cuisine;
- n'accorde pas d'attention au flux multimédia en lecture par le dispositif domotique multimédia 11, pour la raison que l'utilisateur 1 est en communication, s'est éloigné, ou s'est endormi ;
- n'est plus en face du dispositif domotique multimédia 11.

A cette fin, le sondeur 41 de paramètres utilisateur contrôle une pluralité de capteurs du système de capteurs 3; à titre d'exemples non-limitatifs, des capteurs photographiques (appareils photos, caméras, caméras 3D), des capteurs infrarouge, un dispositif RFID, un tapis tactile, des détecteurs de présence, des détecteurs de contact, des interrupteurs de position, des sondes de pression, des capteurs de mouvement, des microphones, des badges, un système de localisation en environnement intérieur.

Pour acquérir les paramètres environnementaux 5, l'analyseur 10 de situation utilisateur comprend un sondeur 51 de paramètres environnementaux permettant de capter tout changement dans ces paramètres 5. A titre d'exemples non-exhaustifs, le sondeur 51 de paramètres environnement 51 permet de détecter
- l'apparition de tout objet, que ça soit physique ou non, modifiant l'environnement 2 (un bébé qui pleure ou la sonnerie d'un téléphone changeant ainsi le niveau de bruit ambiant, l'intrusion d'une personne dans une zone surveillée de l'environnement 2, une porte qui s'ouvre par exemple) ;
- la température/pression/humidité ambiante et/ou le niveau de bruit à différents endroits de l'environnement 2 ; ou plus généralement
- tout évènement ayant pour effet la perturbation de l'attention de l'utilisateur 1 accordée au flux multimédia en lecture par le dispositif domotique multimédia 11.

Pour cela, le sondeur 51 de paramètres environnementaux contrôle une pluralité de capteurs du système de capteurs 3 tels que des détecteurs de fumée, des thermomètres, des capteurs photographiques (appareils photos, caméras), des détecteurs à Infrarouge passif, des détecteurs de présence, des manomètres, des capteurs de mouvement, des microphones, des détecteurs d'ouverture, des détecteurs de contact, des interrupteurs de position, des sondes de pression.

Pour acquérir des métadonnées domotiques 6, l'analyseur 10 de situation utilisateur est pourvu d'un sondeur 61 de métadonnées domotiques permettant de capter tout changement dans ces données 6.

Le sondeur 51 de métadonnées domotiques est configuré pour communiquer, via des protocoles de communications (IMS, UPnP, X10) et des standards d'interconnexion domotiques (KNX) avec les dispositifs domotiques 11-12 afin de détecter, par exemples, l'état (marche/arrêt) du dispositif domotique multimédia 11, la réception d'un appel téléphonique, la fin de cycle d'une machine à laver, l'état des stores, l'arrêt de la cafetière, ou l'arrivée d'un invité annoncé par un dispositif d'interphone.

En particulier, le sondeur 61 de métadonnées domotiques permet de collecter toute information concernant un flux multimédia en lecture par un dispositif domotique multimédia 11. Ces informations peuvent être récupérées depuis
- le guide des programmes électroniques (Electronic program Guide : EPG) qui est généralement diffusé en association avec le flux multimédia ;
- des mots clés à partir d'un contenu multimédia indexé ;
- des données associées à un contenu multimédia en mode VoD ou à la chaine de télévision sélectionnée (retransmission en direct, chaines interactives ou contenu personnel par exemple).

Il est à noter que les sondeurs 41, 51, 61, présentés ci-dessus, peuvent partager des capteurs au sein du système de capteurs 3.

Les paramètres concernant l'utilisateur 1, l'environnement 2 et les dispositifs domotiques 11-12, ainsi sondés, sont transmis au profileur 100 de situation utilisateur.

Le profileur 100 de situation utilisateur est chargé d'établir un profil situation utilisateur sur la base des paramètres transmis depuis le sondeur 41 de paramètres utilisateur, le sondeur 51 de paramètres environnementaux et le sondeur 61 de métadonnées domotiques.

Le profileur 100 de situation utilisateur agrège, à un instant t donné, tous les paramètres mesurés concernant l'utilisateur 1 (informations identitaires, activité courante, centre d'intérêt), l'environnement 1, et les dispositifs domotiques 11-12 (en particulier, le dispositif domotique multimédia 11 : son état, le contenu multimédia en lecture) pour en établir un profil de situation utilisateur accordement à un modèle prédéfini de données (par exemple, un modèle ontologique) compréhensible par l'analyseur 10 de situation utilisateur. Ce modèle permet, en effet, de représenter les possibles relations entre les paramètres contextuels recueillis et d'en vérifier la cohérence.

Avantageusement, le profileur 100 de situation utilisateur corrèle les informations sondées par les sondeurs 41, 51 et 61. Ceci permet, notamment, d'améliorer la robustesse du profil de la situation utilisateur perçu car les informations mesurées par le système de capteurs 3 sont susceptibles d'être incertaines.

Le profil de situation utilisateur, ainsi établi par le profileur 100 de situation utilisateur, est immédiatement communiqué à l'interprétateur 110 de la situation utilisateur profilée permettant d'en inférer la décision appropriée au contexte utilisateur courant.

L'interprétateur 110 de la situation utilisateur profilée se charge d'effectuer une analyse approfondie du profil utilisateur déduit des données brutes transmises depuis les sondeurs 41, 51, 61. Un traitement de « haut niveau » est appliqué au profil situation utilisateur permettant d'apercevoir la situation courante de l'utilisateur 1.

L'interprétateur 110 de la situation utilisateur profilée se charge d'une interprétation sémantique des informations transmises depuis le profileur 100 de situation utilisateur. Cette interprétation sémantique permet, notamment,
- l'identification de l'utilisateur 1 (reconnaissance automatique de la parole/du visage, reconnaissance par badge par exemple) ;
- l'identification de la situation de l'utilisateur 1 (concentré sur le flux multimédia en affichage sur le dispositif domotique multimédia 11,
endormi, en communication téléphonique, en discussion avec une autre personne, en détresse, en mouvement par exemple) ;
- l'identification d'évènements dans l'environnement 2 (niveau de bruit/humidité/température, par exemples, par rapport à des seuils prédéfinis, reconnaissance de sons spécifiques ; cris, claquements de porte, musique par exemple) ;
- l'identification du flux multimédia, s'il y a lieu, en lecture par le dispositif domotique multimédia 11.

A titre d'exemple illustratif, l'interpréteur 110 permet de déduire, à partir du profil de situation établi par le profileur 100 de situation utilisateur, que
- l'utilisateur 1, identifié monsieur B, est fixe, localisé en face de la télévision et éveillé (déduit de la fréquence de battement des paupières);
- le flux multimédia en affichage par le dispositif domotique multimédia 11 est une retransmission en direct sur la chaine A d'un match de football ;
- le téléphone fixe sonne ;
- tout autre paramètre relatif à l'environnement 2 demeure inchangé.

L'interpréteur 110 de situation utilisateur permet, ainsi, de déduire, par exemple,
- si l'utilisateur est attentionné ou non au flux multimédia en lecture par le dispositif domotique multimédia 11, ou
- s'il y a un évènement en cours dans l'environnement 2 qui peut avoir pour effet la perturbation, voire l'interruption, de l'attention de l'utilisateur 1 envers le flux multimédia en lecture par le dispositif domotique multimédia 11 (en communication téléphonique, endormi, en discussion avec une autre personne, parti à la cuisine par exemple).

Une synthèse de la situation utilisateur, ainsi déduite par l'interpréteur 110 de situation utilisateur, est communiquée à l'agent de décision 120 qui se charge de déterminer l'action appropriée à commander.

Dès lors qu'une modification pertinente dans la situation utilisateur est identifiée, l'agent de décision 120 permet
- de commander le déclenchement/la pause/l'arrêt d'exécution d'une ou plusieurs action(s) associée(s) à la situation utilisateur, accordement à des règles 60 prédéfinies et des préférences utilisateur stockées dans la base de données 80 ;
- sauvegarder dans une base données 80 des informations relatives à l'événement produit (utilisateur, date, nom, temps, contenu multimédia en lecture par exemple) sans commander aucune action ; ou
- notifier l'utilisateur, via un gestionnaire 150 d'interaction utilisateur, en l'invitant à effectuer un choix concernant une pluralité d'actions à commander.

Une fois qu'une décision d'action est prise, elle est commandée via le déclencheur 140 qui est directement ou indirectement lié aux dispositifs domotiques 11-12.

Le déclencheur 140 s'agit d'un contrôleur intelligent communiquant avec les dispositifs domotiques 11-12 à l'aide des protocoles de communications domotiques (IMS, UPnP, X10) et des standards d'interconnexion domotiques (KNX) adéquats.

Avantageusement, l'analyseur 10 de contexte utilisateur permet d'accéder, via le déclencheur 140, à toutes les fonctions proposées par les dispositifs domotiques 11-12 d'une manière centralisée.

Le module 23 comprend des interfaces de communications (passerelles/adaptateurs) entre le déclencheur 140 et les dispositifs domotiques 13.

Le module de contrôle multimédia 22 comprend des équipements associés aux dispositifs domotiques multimédia 11 (lecteur enregistreur de DVD ou DVDscope, magnétoscope numérique ou Personal Video Recorder, décodeur TV, modem par exemple) connectés à des sources de flux multimédia 13.

En particulier, le déclencheur 140 est apte à contrôler le module de contrôle multimédia 22, permettant, par exemple,
- de gérer un timeshifting (aussi désigné par « contrôle du direct») ;
- de commuter d'une chaine de télévision à une autre ;
- de contrôler le contenu audio (volume, mode) ; ou plus généralement
- de contrôler le flux audio/vidéo à lire par le dispositif domotique multimédia 11.

Le déclencheur 140 est, en outre, apte à contrôler le module de lecture 21 du flux multimédia transmis depuis le module de contrôle multimédia 22, permettant d'allumer, d'éteindre ou de mettre en mode veille le dispositif domotique multimédia 11.

Les règles 60 dictent les actions à exécuter en fonction de la situation utilisateur déduites par l'interprétateur 110 de situation utilisateur. Ces règles 60 peuvent être décrites à l'aide de tout langage de programmation logique (First Order Logic, F-Logic, Fuzzy Logic, neural network par exemple).

La base de données 80 est utilisée pour stocker plusieurs types de données qui peuvent être utilisées ou partagées entre les différents modules du système à des fins différentes. Ces données comprennent :
- un ou plusieurs profil(s) utilisateur : des préférences utilisateur associées à des utilisateurs identifiables d'une manière unique ;
- des paramètres de configuration des différents modules de système domotique contextuel: protocoles de communications, standards d'interconnexion domotiques, paramètres de configurations des sondeurs 41, 51, 61 (nombre d'observations, fréquence d'échantillonnage, quantification, données de calibration, coefficients de pondération par exemple), pilotes informatiques (drivers), profil utilisateur par défaut ;
- des informations concernant des évènements récemment produits (date, heure, utilisateur, évènement, chaine de télévision, titre du contenu multimédia affiché par exemple);
- l'historique des choix utilisateur et des interactions utilisateur rentrées via le gestionnaire 150 d'interactions utilisateur.

Afin d'améliorer au mieux l'automatisation du système domotique contextuel et limiter, ainsi, les interventions utilisateur, un module d'apprentissage automatique 70 est configuré pour modéliser les choix rentrés par l'utilisateur lorsqu'il est notifié par le système. Le système peut ainsi améliorer ses connaissances sur le comportement de l'utilisateur. Des règles 60 peuvent être ainsi modifiées, ajoutées, ou supprimées.

Avantageusement, afin de réduire le nombre des notifications émises par le système domotique contextuel, les choix utilisateur sont stockés dans la base de données 80 afin d'être modélisés par la suite par le module d'apprentissage automatique 70.

Le gestionnaire 150 d'interactions utilisateur permet à l'utilisateur d'interagir avec le système domotique contextuel dans deux modes, à savoir,
- un mode de configuration, initié par l'utilisateur, lui permettant d'apporter au système des informations telles que des préférences utilisateur ou des règles 60, dirigeant le comportement du système domotique contextuel. Ces informations peuvent être enregistrées dans la base de données 80 ;
- un mode de notification, initié par le système, en y apportant une information à l'utilisateur ou en y invitant l'utilisateur à effectuer au moins un choix d'action parmi une pluralité d'actions à commander.

Dans un mode de réalisation, le gestionnaire 150 des interactions utilisateur propose des interfaces utilisateur graphiques (tactiles ou simples).

Dans un autre mode de réalisation, le gestionnaire 150 des interactions utilisateur propose des interfaces utilisateurs réactives à la parole de l'utilisateur, grâce à des moyens de reconnaissance vocale, assurant ainsi une assistance domotique par interaction intuitive et naturelle.

En variante ou en combinaison, le gestionnaire 150 des interactions utilisateur est pourvu d'un moyen de commande à distance.

Dans le mode de configuration, l'utilisateur peut configurer certains paramètres afin de mieux guider le comportement de l'analyseur 10 de situation utilisateur. A titre d'exemple, l'utilisateur 1 peut
- spécifier la liste des actions qui seront automatiquement déclenchées, en temps réel ou en différé, lorsqu'un certain évènement est produit ;
- spécifier la liste des fonctions qui seront automatiquement déclenchées selon le type du contenu multimédia en cours de lecture (par exemple, pas de timeshifting pour les contenus publicitaires, ou pour des matchs de football retransmis en direct, timeshifting uniquement pour des contenus favoris prédéfinis) ;
- associer une fonction à un certain évènement (par exemple, éteindre l'écran dans un délai prédéfini sans interrompre le timeshifting).

La configuration des règles 60 est personnalisée par l'utilisateur 1 lors du mode de configuration de l'analyseur 10 de situation utilisateur. A défaut, des règles par défaut sont proposées par le système domotique contextuel (à titre d'exemple, « mettre en pause la lecture du flux multimédia en cours de lecture par le dispositif domotique multimédia 11, dès qu'aucune attention n'est accordée, par l'utilisateur 1, à ce flux parce qu'il répond à un appel téléphonique entrant par exemple» , « proposer à l'utilisateur 1 de reprendre la lecture de ce flux multimédia à partir du point de pause, ou de reprendre le direct, dès qu'il est encore en face du dispositif domotique multimédia 11 et qu'il n'est plus en communication téléphonique »). L'agent de décision 120 peut ainsi inférer les actions à commander conformément aux règles 60 prédéfinies par l'utilisateur 1.

Des informations additionnelles concernant le contenu multimédia en cours de lecture (par exemple un programme favori, un contenu publicitaire, un contenu VoD, une retransmission en directe), obtenues depuis l'EPG, ou à l'aide d'un analyseur de contenu multimédia, permettent, notamment, d'améliorer la consistance de la décision prise par l'agent de décision 120. Le système domotique contextuel est configuré pour interagir, via le module de requête 24, avec des dispositifs externes 14 requérant des informations sur la situation de l'utilisateur 1. Ces requêtes visent, par exemple, la publication de contenus publicitaires en fonction du contexte utilisateur 1, la mesure d'audience des médias audiovisuels, la modélisation du quotidien des utilisateurs, ou le suivi depuis un centre médical pour le bien-être de l'utilisateur 1 (effraction, détresse, chute par exemple). Le modèle de requête 24 est, notamment, protégé contre les attaques malveillantes.

Il est à noter que le système présenté ci-dessus permet l'analyse systématique du contexte utilisateur (l'activité courante de l'utilisateur 1, événements en cours dans l'environnement 2 de l'utilisateur 1, le contenu multimédia en lecture par le dispositif domotique multimédia 11 ).

## Revendications

1. Procédé domotique contextuel au service d'au moins un utilisateur (1) pourvu d'une pluralité de dispositifs domotiques (11-12) au sein d'un environnement (2), ce procédé comprenant les étapes suivantes :
- sondage de paramètres utilisateur (4);
- sondage de paramètres environnementaux (5);
- sondage de métadonnées domotiques (6) ;
- profilage d'une situation utilisateur à l'aide des données sondées ;
- analyse de la situation utilisateur profilée;
- décision d'au moins une action à commander selon l'analyse de la situation utilisateur et de règles (60) prédéfinies.

2. Procédé selon la revendication 1, **caractérisé en ce que** la pluralité de dispositifs domotiques comprend un dispositif domotique multimédia (11).

3. Procédé selon la revendication 2, **caractérisé en ce que** les métadonnées domotiques comprennent au moins une information concernant un flux multimédia en lecture par le dispositif domotique multimédia (11).

4. Procédé selon l'une quelconque des revendications 2 ou 3, **caractérisé en ce que** les règles (60) prédéfinies dépendent d'au moins une information concernant un flux multimédia en lecture par le dispositif domotique multimédia (11).

5. Procédé selon la revendication 1, **caractérisé en ce qu'**il comprend, en outre,
- une étape de configuration permettant de spécifier les règles (60) prédéfinies;
- une étape de notification de l'utilisateur (1).

6. Procédé selon la revendication 5, **caractérisé en ce qu'**il comprend, en outre, une étape d'apprentissage automatique à partir des réponses utilisateur aux notifications.

7. Procédé selon la revendication 1, **caractérisé en ce que** l'étape d'analyse de la situation utilisateur comprend une étape d'identification de l'utilisateur (1).

8. Système domotique contextuel au service d'au moins un utilisateur (1) pourvu d'une pluralité de dispositifs domotiques (11-12) au sein d'un environnement (2), ce système comprenant
- un sondeur (41) des paramètres utilisateur ;
- un sondeur (51) de paramètres environnementaux ;
- un sondeur (61) de métadonnées domotiques ;
- un profileur (100) de situation utilisateur à l'aide des données sondées ;
- un interpréteur (110) de la situation utilisateur profilée ;
- un agent de décision (120) d'au moins une action à commander selon les résultats de l'interpréteur (110) de situation utilisateur et de règles (60) prédéfinies.

9. Système selon la revendication 8, **caractérisé en ce que** la pluralité de dispositifs domotiques comprend un dispositif domotique multimédia (11).

10. Système selon la revendication 8, **caractérisé en ce qu'**il comprend, en outre, un déclencheur (140) communiquant, à l'aide de protocoles de communications domotiques, avec les dispositifs domotiques (11-12).

11. Système selon la revendication 10, **caractérisé en ce que** le déclencheur (140) est configuré pour contrôler les modules de contrôles multimédia (22).

12. Système selon la revendication 8, **caractérisé en ce qu'**il comprend, en outre, un gestionnaire (150) d'interactions utilisateur réactives à la parole de l'utilisateur.

13. Système selon la revendication 8, **caractérisé en ce qu'**il comprend, en outre, un module de requête (24) permettant d'interagir avec des dispositifs externes (14) requérant des informations sur la situation de l'utilisateur (1).
